# EUROPEAN PATENT APPLICATION

(11) **EP 1 574 526 A1**
(43) Date of publication of application: **14.09.2005**
(21) Application number: 03777403.1
(22) Date of filing: 09.12.2003
(51) Int. Cl.: C08F 6/00, C08F 8/04, C08F 212/08, C08F 232/06, C09J 125/08, C09J 157/00

(54) **PROCESS FOR THE PRODUCTION OF HYDROGENATED PETROLEUM RESIN**

(30) Priority: 20.12.2002 JP 2002370801
(71) Applicant: IDEMITSU KOSAN CO., LTD., Tokyo 100-0005 (JP)
(72) Inventor: YAMANE, Hideki, Shunan-shi, Yamaguchi 745-0843 (JP)
(74) Representative: Gille, Christian
(86) International application number: PCT/JP2003/015734
(87) International publication number: WO 2004/056882

(57) **Abstract**

The present invention provides a method for producing a hydrogenated petroleum resin employed as a tackifying resin and formed from a cyclopentadiene compound and a vinyl aromatic compound, wherein both enhancement of adhesion performance of the tackifying resin and productivity of the resin can be attained.

The method of the invention for producing a hydrogenated petroleum resin includes the steps of:
polymerizing a cyclopentadiene compound and a vinyl aromatic compound through solution copolymerization in a first solvent; removing the solvent so as to isolate the formed copolymer; hydrogenating the isolated copolymer dissolved in a second solvent; and removing the second solvent from the formed hydrogenated reaction mixture for isolating a hydrogenated petroleum resin, wherein the first solvent comprises a recycled solvent and contains a low-molecular-weight compound which is by-produced during polymerization in an amount of 4 mass% or less, and the removal of the second solvent is performed such that a hydrogenated low-molecular-weight compound remains in an amount of 6 to 10 mass% in the hydrogenated petroleum resin.

## Description

### Technical Field

The present invention relates to a method for producing a hydrogenated petroleum resin useful as a tackifying resin, the method including hydrogenating a copolymer of specific monomers. The present invention also relates to a hot-melt adhesive composition containing the hydrogenated petroleum resin.

### Background Art

Hot-melt adhesives, having excellent properties such as high coating speed, high curing speed, solvent-free handling, barrier property, energy saving, and economical advantages, have been used in a variety of fields, and the use thereof increases more and more. Generally, hot-melt adhesives are composed of, for example, a composition containing a base polymer such as natural rubber, ethylene-vinyl acetate copolymer, styrene-butadiene-styrene block copolymer, a hydrogenated product thereof, styrene-isoprene-styrene block copolymer, or a hydrogenated product thereof, to which a tackifying resin and a plasticizer are added.

Such a tackifiying resin is generally composed of petroleum resin, coumarone resin, phenolic resin, terpene resin, rosin-based resin, or a hydrogenated product thereof.

A type of hydrogenated petroleum resins is known to be a hydrogenated petroleum resin produced from a cyclopentadiene compound and a vinyl aromatic compound serving as starting materials. Generally, the hydrogenated petroleum resin is produced by subjecting a cyclopentadiene compound and a vinyl aromatic compound to solution polymerization; removing, from the formed polymer mixture, the solvent and a low-molecular-weight compound having a molecular weight of about 100 to about 350; and hydrogenating the separated polymer to a predetermined percent hydrogenation.

According to the above method, the thus-separated low-molecular-weight compound and the polymerization solvent can be recycled in a subsequent polymerization reaction system without separating the low-molecular-weight compound from the polymerization solvent, because the low-molecular-weight compound can be employed as a starting material.

However, the hydrogenated petroleum resin produced through the above method may have insufficient tackifying performance. In this connection, Japanese Patent Application Laid-Open (*kokai*) No. 6-56920 discloses that tackifying performance of such a hydrogenated petroleum resin, particularly a partially hydrogenated petroleum resin, is enhanced when a low-molecular-weight compound by-produced upon polymerization is not employed again as a polymerization starting material.

On the other hand, when such a low-molecular-weight compound is removed to an excessive extent in the course of production steps of a tackifying resin, adhesion performance of the final product; e.g., creep at a constant temperature, is adversely affected. In addition, when a polymerization solvent containing a low-molecular-weight compound is not recycled in the polymerization reaction system, the total productivity of the hydrogenated petroleum resin production process decreases, thereby raising an economical problem.

### Disclosure of the Invention

In view of the foregoing, an object of the present invention is to provide a method for producing a hydrogenated petroleum resin employed as a tackifying resin and formed from a cyclopentadiene compound and a vinyl aromatic compound, wherein both enhancement of adhesion performance of the tackifying resin and productivity of the resin can be attained.

The present inventors have carried out extensive studies in order to attain the aforementioned object, and have found that a high-performance tackifying resin for use in a hot-melt adhesive can be produced through employment of a production method in which both the amount of low-molecular-weight compound recycled in a production step and the amount of low-molecular-weight compound remaining in the hydrogenated copolymer serving as a final product are regulated. The present invention has been accomplished on the basis of this finding.

Accordingly, the present invention provides a method for producing a hydrogenated petroleum resin, characterized in that the method comprises the steps of: polymerizing a cyclopentadiene compound and a vinyl aromatic compound through solution copolymerization in a first solvent; removing the solvent so as to isolate the formed copolymer; hydrogenating the isolated copolymer dissolved in a second solvent; and removing the second solvent from the formed hydrogenated reaction mixture for isolating a hydrogenated petroleum resin, wherein the first solvent comprises a recycled solvent and contains a low-molecular-weight compound which is by-produced during polymerization in an amount of 4 mass% or less, and the removal of the second solvent is performed such that a hydrogenated low-molecular-weight compound remains in an amount of 6 to 10 mass% in the hydrogenated petroleum resin.

The present invention also provides a hot-melt adhesive composition comprising the thus-produced hydrogenated petroleum resin.

According to the present invention, a vinyl aromatic compound containing substantially no high-molecular weight compound is polymerized as a starting material, to thereby produce a cyclopentadiene compound-vinyl aromatic compound copolymer having a softening point falling within a range of 50 to 120°C. Subsequently, the copolymer is hydrogenated, to thereby produce a cyclopentadiene compound-vinyl aromatic compound copolymer hydrogenated product having a softening point falling within a range of 90 to 160°C. The hydrogenated product can serve as an excellent tackifying resin for use in a hot-melt adhesive.

### Best Mode for Carrying Out the Invention

### (1) Production of copolymer

According to the method of the present invention, a cyclopentadiene compound and a vinyl aromatic compound are thermally polymerized in a solvent.

Examples of the cyclopentadiene compound include cyclopentadiene, methylcyclopentadiene, ethylcyclopentadiene, dimers thereof, and codimers thereof. Examples of the vinyl aromatic compound include styrene, α-methylstyrene, and vinyltoluene.

No particular limitation is imposed on the ratio of the cyclopentadiene compound to the vinyl aromatic compound upon mixing thereof. Desirably, the ratio by mass, cyclopentadiene compound : vinyl aromatic compound, is generally 70 : 30 to 20 : 80, preferably 60 : 40 to 40 : 60.

Examples of the polymerization solvents which can be used in the method of the present invention include aromatic solvents, naphthene-based solvents, and aliphatic hydrocarbon solvents. Specific examples of the solvents which are preferably used include benzene, toluene, xylene, cyclohexane, dimethylcyclohexane, and ethylcyclohexane. The polymerization solvent is used in an amount of 50 to 500 parts by mass based on 100 parts by mass of the monomer mixture, preferably 60 to 300 parts by mass.

Conventionally, the polymerization solvent has been recovered after completion of polymerization and repeatedly used, from the viewpoint of economy. The thus-recovered solvent generally contains a low-molecular-weight compound having a molecular weight of about 200 to about 350. However, as mentioned above, when the low-molecular-weight compound content is large, the tackifying agent produced from the polymer has poor performance.

According to the present invention, in order to prevent deterioration of the above performance, the low-molecular-weight compound content of the polymerization solvent, upon recycled use, is regulated to 4 mass% or less, more preferably 3.5 mass% or less. Specifically, depending on the low-molecular-weight compound content of the recycled solvent, the solvent is employed as a polymerization solvent at the start of polymerization reaction, without further treatment or with dilution by a fresh solvent so as to control the low-molecular-weight compound content to 4 mass% or less.

In the method of the present invention, the solvent has been desirably heated to 100°C or higher, preferably 150°C or higher, at the start of polymerization reaction. The mixture of a cyclopentadiene compound and a vinyl aromatic compound is added to the thus-heated solvent in a divided manner, so as to cause copolymerization.

The vinyl aromatic compound used herein desirably has a high-molecular-weight (some ten thousands to some hundred thousands, detected through re-precipitation) compound content of 1,000 ppm by mass or less, preferably 100 ppm by mass or less.

The addition is desirably carried out in an equally divided manner over a period of time generally 0.5 to 5 hours, preferably 1 to 3 hours.

The copolymerization reaction is desirably continued even after completion of the divided-manner addition of the mixture of a cyclopentadiene compound and a vinyl aromatic compound. No particular limitation is imposed on the reaction conditions, and generally employed conditions are as follows: reaction temperature of 150 to 350°C, preferably 220 to 300°C; reaction pressure of 0 to 2 MPa, preferably 0 to 1.5 MPa, reaction time of 1 to 10 hours, preferably 1 to 8 hours.

Subsequently, the thus-formed reaction mixture is subjected to solvent removal at 100 to 300°C under 100 to 1 mmHg for 1 to 3 hours, to thereby remove volatile components (including the solvent and a low-molecular-weight compound), whereby a copolymer is yielded. At this stage, when the solvent has a low-molecular-weight compound content of 4 mass% or less, the solvent can be recycled in a subsequent polymerization step without further treatment.

The cyclopenadiene compound-vinyl aromatic compound copolymer which has been produced through the aforementioned method of the present invention has a softening point of 50 to 120°C, a vinyl aromatic compound unit content of 30 to 90 mass%, a bromine value of 30 g/100 g to 90 g/100 g, and a number average molecular weight of 400 to 1,100.

### (2) Production of hydrogenated petroleum resin

The hydrogenated petroleum resin of the present invention is produced by hydrogenating the above-described copolymer.

The hydrogenation reaction can be performed by dissolving the copolymer in a solvent such as cyclohexane or tetrahydrofuran, and hydrogenating in the presence of a catalyst such as nickel, palladium, cobalt, platinum, or rhodium under the following reaction conditions: a reaction temperature of 120 to 300°C, preferably 150 to 250°C; a reaction pressure of 1 to 6 MPa; and a reaction time of 1 to 7 hours, preferably 2 to 5 hours.

Subsequently, the thus-formed hydrogenated reaction mixture is treated, for example, at 100 to 300°C under 100 to 1 mmHg for 10 minutes to 3 hours, to thereby remove volatile components (including the solvent and a low-molecular-weight compound), whereby a hydrogenated petroleum resin can be yielded.

However, as mentioned above, when such a low-molecular-weight compound is removed to an excessive extent, adhesion performance of the final product; e.g., creep at a constant temperature, is adversely affected. In the present invention, it has been found that when the low-molecular-weight compound content of the hydrogenated petroleum resin is 6 to 10 mass%, preferably 7 to 8 mass%, physical properties such as creep at constant temperature of a hot-melt adhesive produced from the tackifying resin are successfully improved.

In order to attain such a low-molecular-weight compound content, solvent removal from the hydrogenated reaction mixture is preferably carried out under comparatively mild conditions. Specifically, the operation conditions can be appropriately predetermined from the ranges: temperature of 100 to 250°C, pressure of 50 to 1 mmHg, and time of about 10 minutes to about 2 hours.

The cyclopentadiene compound-vinyl aromatic compound copolymer hydrogenated product which has been produced through the method of the present invention is a type of hydrogenated petroleum resin having a softening point of 90 to 160°C, a vinyl aromatic compound unit content of 0 to 35 mass%, a bromine value of 0 g/100 g to 30 g/100 g, and a number average molecular weight of 500 to 1,100.

Thus, the hydrogenation of the present invention is partial or complete hydrogenation that attains hydrogenation of aromatic rings.

### (3) Production of hot-melt adhesive

The hot-melt adhesive according to the present invention is produced by incorporating a base polymer, a plasticizer, and a similar additive into the aforementioned hydrogenated petroleum resin.

Examples of the base polymer which is employed in the hot-melt adhesive of the present invention include natural rubber, ethylene-vinyl acetate copolymer, amorphous poly(α-olefin), styrene-butadiene-styrene block copolymer (SBS), styrene-isoprene-styrene block copolymer (SIS), and rubber-component-hydrogenated products such as styrene-ethylene-butylene-stryrene rubber (SEBS) and styrene-ethylene-propylene-stryrene rubber (SEPS).

Examples of the plasticizer which is employed in the hot-melt adhesive of the present invention include paraffin-based process oil, which is produced through distillation under reduced pressure of a heavy oil fraction which has been obtained through distillation of crude oil at atmospheric pressure; hydro-refining; and purification such as dewaxing. Examples includes naphthene-based process oil produced through treatment, carried out after distillation under reduced pressure, such as solvent extraction, hydrogenation, or treatment with terra alba. Examples further includes polybutene and liquid poly(α-olefin).

No particular limitation is imposed on the method for producing a hot-melt adhesive, and a heat melting with stirring method or a kneading method by means of a propeller-type stirrer, a twin screw kneader, a kneader, etc. can be employed. No particular limitation is imposed on the sequence of feeding of the components. No particular limitation is imposed on the heating temperature, and the production can be performed generally at 120°C to 190°C. The compositional proportions of the aforementioned three components, which vary depending on the desired physical properties to be attained, are 30 to 70 mass% (hydrogenated petroleum resin), 15 to 40 mass% (base polymer), and 10 to 40 mass% (plasticizer). In addition to the aforementioned hydrogenated petroleum resin, base polymer, and plasticizer, an antioxidant, wax, and fillers can be added to the hot-melt adhesive of the present invention, in amounts so as not to impair the physical properties of the adhesive.

The hot-melt adhesive of the present invention exhibits excellent heat resistance, thermal stability, and weather resistance. Thus, the adhesive can be used in a variety of fields such as hygiene materials, wrapping materials, bookbinding, fiber, woodworking, electric materials, can making, building, bag making, and binders for road building.

### Examples

The present invention will next be described in more detail by way of Examples.

Physical properties of hydrogenated petroleum resins and performance of hot-melt adhesives were evaluated on the basis of the following method.

### (1) Softening point of compounds

The softening point was measured in accordance with JIS K2207.

### (2) Melt viscosity

The melt viscosity was measured in accordance with JIS K6862 by use of a B-type viscometer.

### (3) Adhesive strength

The adhesive strength was measured in accordance with JIS Z0237.

### (4) Loop tack

The loop tack was measured in accordance with the FINAT test standards.

### (5) Holding power (shear adhesion)

The holding power was measured in accordance with JIS Z0237.

### Example 1

### (1) Production of copolymer

In an nitrogen-purged 1-L polymerization reactor equipped with a stirrer, xylene (332 g; 90 parts by mass based on 100 parts by mass of starting monomers) which had been recovered from a reaction mixture of a polymerization experiment (low-molecular-weight compound content: 3.5 mass%) was placed and heated to 260°C. Under continuous stirring, a mixture containing (di)cyclopentadiene (cyclopentadiene and dicyclopentadiene; 20 : 80 (mass)) (184 g) and styrene (184 g) (50 : 50 (mass)) was added to the solvent over 180 minutes. Subsequently, copolymerization was continued for 130 minutes.

After completion of reaction, the reaction mixture was collected and treated in a rotary evaporator at 200°C and 10 mmHg for two hours, so as to remove unreacted monomers and xylene, to thereby yield 348 g of a (di)cyclopentadiene-styrene copolymer. Table 1 shows properties of the copolymer.

### (2) Production of hydrogenated petroleum resin

In an nitrogen-purged 300-mL hydrogenation reactor equipped with a stirrer, cyclohexane (solvent) (70 g), the copolymer produced in the aforementioned (1) (70 g), and a nickel catalyst (1.5 g) were placed, and the mixture was subjected to hydrogenation at 230°C and a hydrogen pressure of 4 MPa for four hours.

After completion of reaction, the reaction mixture was collected, and an antioxidant (4,000 ppm) was added to the mixture. The mixture was treated in a rotary evaporator at 200°C and 15 mmHg for one hour so as to remove cyclohexane, to thereby yield 72 g of a (di)cyclopentadiene-styrene copolymer hydrogenated product. Table 1 shows properties of the hydrogenated petroleum resin.

### (3) Production and performance evaluation of hot-melt adhesive

The hydrogenated petroleum resin obtained in the aforementioned (2), EVA copolymers (Ultrathene 720 and Ultrathene 722, products of Tosoh Corporation), and waxes (Hi-Mic 1080, product of Nippon Seiro Co., Ltd. and PALAFLINT H1, product of Sasol) were mixed at compositional proportions shown in Table 2, and the mixture was kneaded by means of a kneader at 170°C for 60 to 80 minutes, to thereby produce a hot-melt adhesive, and physical properties of the adhesive were evaluated. The results are shown in Table 2.

The hydrogenated petroleum resin obtained in the aforementioned (2), SBS copolymer (KRATON D-1102 JS, product of Shell Japan Ltd., (styrene/rubber (mass) = 30/70)), oil (PS-32, product of Idemitsu kosan Co., Ltd.), and an antioxidant (Irganox 1010, product of Ciba Speciality Chemicals K.K. (Japan)) were mixed at compositional proportions shown in Table 3, and the mixture was kneaded by means of a kneader (laboplast mill) at 140°C for 40 minutes, to thereby produce a hot-melt adhesive, and physical properties of the adhesive were evaluated. The results are shown in Table 3.

### Comparative Example 1

### (4) Production of copolymer

In an nitrogen-purged 1-L polymerization reactor equipped with a stirrer, xylene (332 g; 90 parts by mass based on 100 parts by mass of starting monomers) which had been recovered from a reaction mixture of a polymerization experiment (low-molecular-weight compound content: 3.6 mass%) was placed and heated to 260°C. Under continuous stirring, a mixture containing (di)cyclopentadiene (cyclopentadiene and dicyclopentadiene; 20 : 80 (mass)) (184 g) and styrene (184 g) (50 : 50 (mass)) was added to the solvent over 180 minutes. Subsequently, copolymerization was continued for 110 minutes.

After completion of reaction, the reaction mixture was collected and treated in a rotary evaporator at 200°C and 10 mmHg for two hours, so as to remove unreacted monomers and xylene, to thereby yield 311 g of a (di)cyclopentadiene-styrene copolymer. Table 1 shows properties of the copolymer.

### (5) Production of hydrogenated petroleum resin

In an nitrogen-purged 300-mL hydrogenation reactor equipped with a stirrer, cyclohexane (solvent) (70 g), the copolymer produced in the aforementioned (4) (70 g), and a nickel catalyst (1.5 g) were placed, and the mixture was subjected to hydrogenation at 230°C and a hydrogen pressure of 4 MPa for four hours.

After completion of reaction, the reaction mixture was collected, and an antioxidant (4,000 ppm) was added to the mixture. The mixture was treated in a rotary evaporator at 200°C and 10 mmHg for two hours so as to remove cyclohexane, to thereby yield 71 g of a (di)cyclopentadiene-styrene copolymer hydrogenated product. Table 1 shows properties of the hydrogenated petroleum resin.

### (6) Production and performance evaluation of hot-melt adhesive

The procedure of Example 1 (3) was repeated, except that the hydrogenated petroleum resin obtained in the aforementioned (5) was used instead of the hydrogenated petroleum resin obtained in Example 1 (2), to thereby produce a hot-melt adhesive. The adhesive was evaluated in terms of physical properties. Tables 2 and 3 show the results.

### Comparative Example 2

### (7) Production of copolymer

In an nitrogen-purged 1-L polymerization reactor equipped with a stirrer, xylene (332 g; 90 parts by mass based on 100 parts by mass of starting monomers) which had been recovered from a reaction mixture of a polymerization experiment (low-molecular-weight compound content: 4.5 mass%) was placed and heated to 260°C. Under continuous stirring, a mixture containing (di)cyclopentadiene (cyclopentadiene and dicyclopentadiene; 20 : 80 (mass)) (184 g) and styrene (184 g) (50 : 50 (mass)) was added to the solvent over 180 minutes. Subsequently, copolymerization was continued for 130 minutes.

After completion of reaction, the reaction mixture was collected and treated in a rotary evaporator at 200°C and 15 mmHg for one hour so as to remove unreacted monomers and xylene, to thereby yield 352 g of a (di)cyclopentadiene-styrene copolymer. Table 1 shows properties of the copolymer.

### (8) Production of hydrogenated petroleum resin

The hydrogenation procedure of Example 1 (2) was repeated, except that the copolymer obtained in the aforementioned (7) was used, to thereby yield 70 g of a (di)cyclopentadiene-styrene copolymer hydrogenated product. Table 1 shows properties of the hydrogenated petroleum resin.

### (9) Production and performance evaluation of hot-melt adhesive

The procedure of Example 1 (3) was repeated, except that the hydrogenated petroleum resin obtained in the aforementioned (8) was used instead of the hydrogenated petroleum resin obtained in Example 1 (2), to thereby produce a hot-melt adhesive. The adhesive was evaluated in terms of physical properties. Tables 2 and 3 show the results.

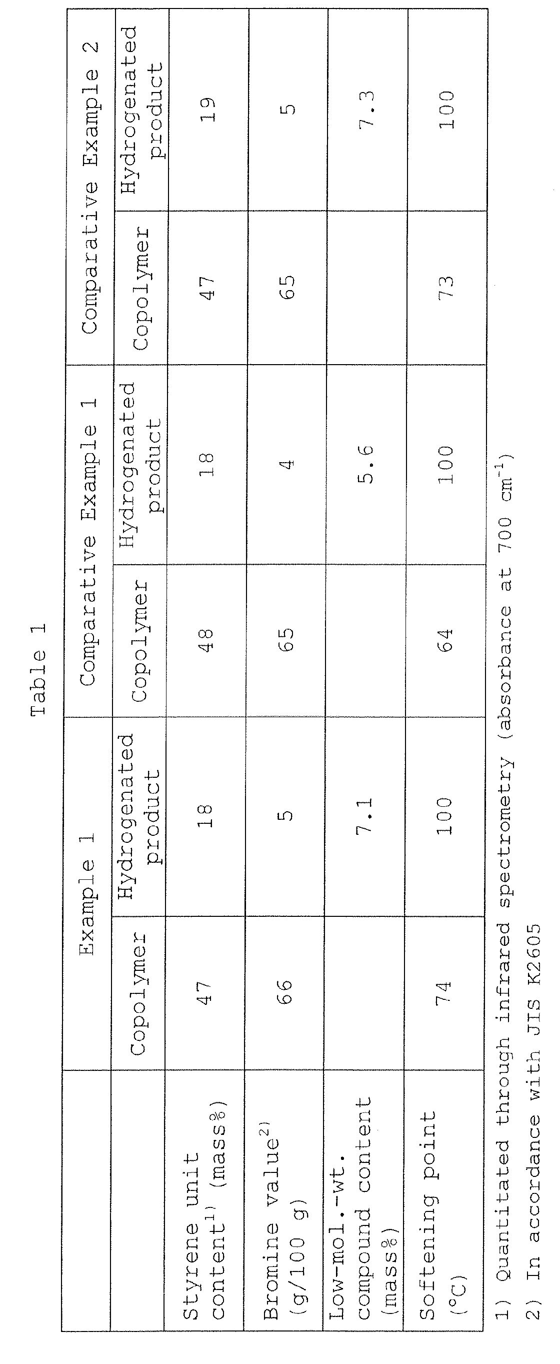

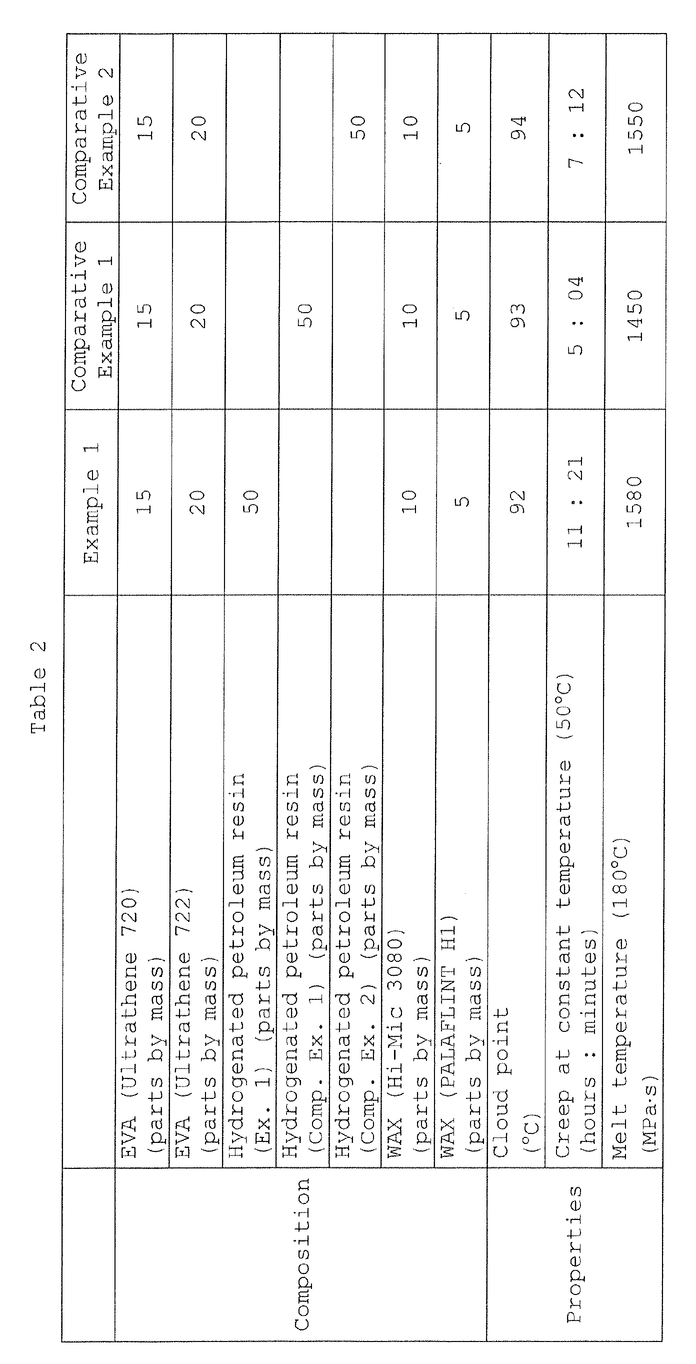

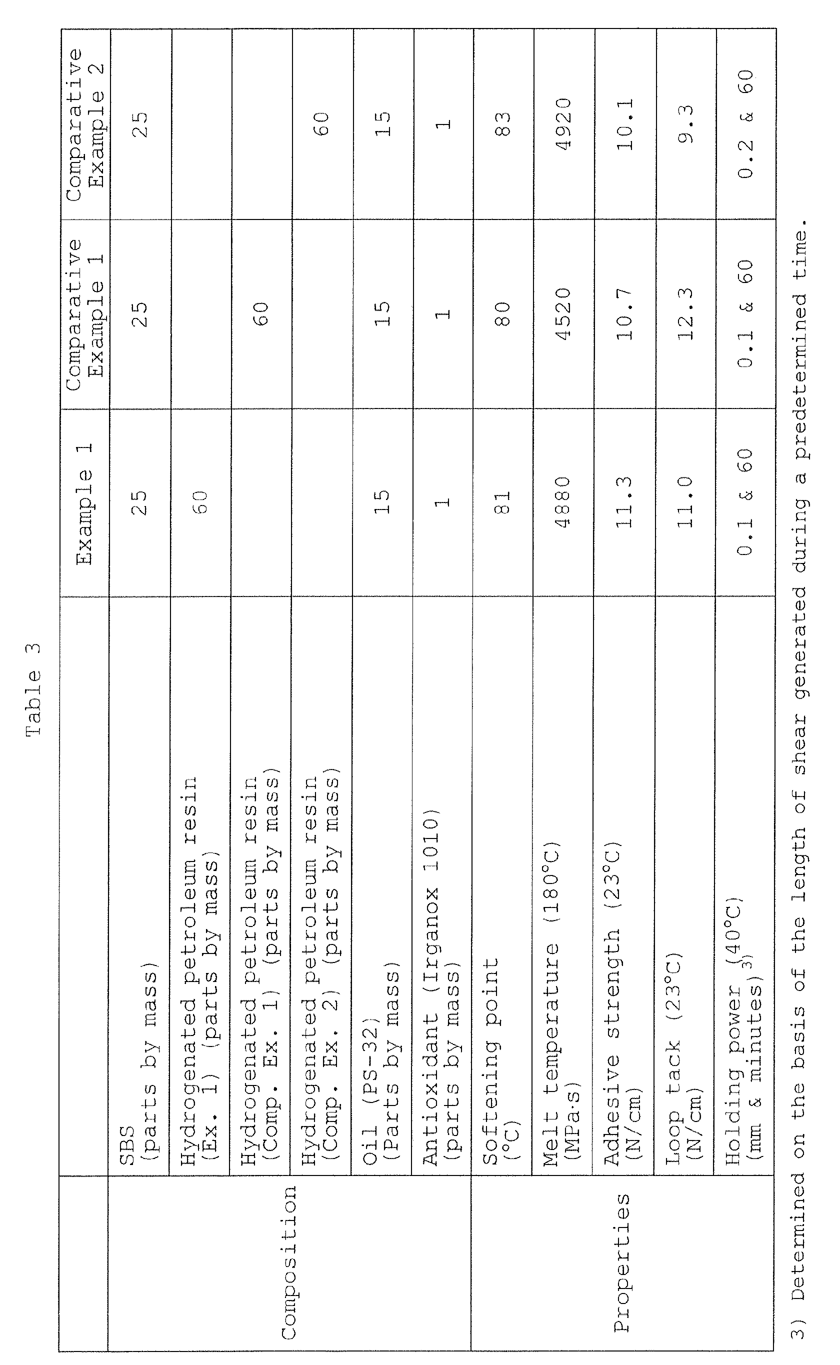

As is clear from Tables 2 and 3, the hot-melt adhesive obtained in Example 1 (3) exhibits improved creep at a constant temperature, serving as an index for heat resistance, as compared with the hot-melt adhesive obtained in Comparative Example 1 (6), while other properties such as adhesive force, loop tack, and holding power are maintained.

Also as is clear from Tables 2 and 3, the hot-melt adhesive obtained in Example 1 (3) exhibits improved adhesive force, loop tack, and creep at a constant temperature, as compared with the hot-melt adhesive obtained in Comparative Example 2 (9).

### Industrial Applicability

According to the present invention, a high-performance tackifying resin for use in a hot-melt adhesive and a high-performance hot-melt adhesive can be produced through employment of the production method in which both the amount of low-molecular-weight compound contained in a polymerization solvent recycled in a polymerization step and the amount of low-molecular-weight compound remaining in the hydrogenated copolymer are regulated.

## Claims

1. A method for producing a hydrogenated petroleum resin, **characterized in that** the method comprise the steps of: polymerizing a cyclopentadiene compound and a vinyl aromatic compound through solution copolymerization in a first solvent; removing the solvent so as to isolate the formed copolymer; hydrogenating the isolated copolymer dissolved in a second solvent; and removing the second solvent from the formed hydrogenated reaction mixture for isolating a hydrogenated petroleum resin, wherein the first solvent comprises a recycled solvent and contains a low-molecular-weight compound which is by-produced during polymerization in an amount of 4 mass% or less, and the removal of the second solvent is performed such that a hydrogenated low-molecular-weight compound remains in an amount of 6 to 10 mass% in the hydrogenated petroleum resin.

2. A hydrogenated petroleum resin which is produced through a method as recited in claim 1 and which resin has a softening point of 90 to 160°C.

3. A hot-melt adhesive composition comprising a hydrogenated petroleum resin which is produced through a method as recited in claim 1.
